# EUROPÄISCHE PATENTSCHRIFT

(11) **EP 1 819 432 B1**
(45) Veröffentlichungstag und Bekanntmachung des Hinweises auf die Patenterteilung: **31.12.2008**
(21) Anmeldenummer: 05848488.2
(22) Anmeldetag: 28.11.2005
(51) Int. Cl.: B01J 8/02, C01B 3/38

(54) **VERFAHREN ZUM REGENERIEREN EINES REFORMERS**
METHOD FOR REGENERATING A REFORMER
PROCEDE POUR REGENERER UN REFORMEUR

(30) Priorität: 10.12.2004 DE 102004059647
(43) Veröffentlichungstag der Anmeldung: 22.08.2007
(73) Patentinhaber: Enerday GmbH, 82131 Stockdorf (DE)
(72) Erfinder: MÜHLNER, Marco, 19374 Raduhn (DE); KÄDING, Stefan, 17309 Zerrenthin (DE)
(74) Vertreter: Schumacher & Willsau
(86) Internationale Anmeldenummer: PCT/DE2005/002193
(87) Internationale Veröffentlichungsnummer: WO 2006/060999

(56) Entgegenhaltungen:
- US-A- 4 293 315
- US-A1- 2003 150 163
- US-A1- 2004 241 505

## Beschreibung

Die Erfindung betrifft ein Verfahren zum Regenerieren eines Reformers, dem im kontinuierlichen Betrieb Brennstoff und Oxidationsmittel zugeführt wird, wobei die Zuführrate des Brennstoffs zum Zwecke der Regeneration gegenüber der Zuführrate im kontinuierlichen Betrieb herabgesetzt wird.

Die Erfindung betrifft weiterhin einen Reformer mit einer Steuerung, die eine Regeneration des Reformers ermöglicht, wobei die Steuerung geeignet ist, dem Reformer im kontinuierlichen Betrieb Brennstoff und Oxidationsmittel zuzuführen und die Zuführrate des Brennstoffs zum Zwecke der Regeneration gegenüber der Zuführrate im kontinuierlichen Betrieb herabzusetzen.

Gattungsgemäße Reformer und gattungsgemäße Verfahren haben zahlreiche Anwendungsbereiche. Insbesondere dienen sie dazu, einer Brennstoffzelle ein wasserstoffreiches Gasgemisch zuzuführen, aus dem dann auf der Grundlage elektrochemischer Vorgänge elektrische Energie erzeugt werden kann. Derartige Brennstoffzellen kommen beispielsweise im Kraftfahrzeugbereich als Zusatzenergiequellen, sogenannte APUs ("auxiliary power unit"), zum Einsatz.

Der Reformierungsprozess zum Umsetzen von Brennstoff und Oxidationsmittel zu Reformat kann nach unterschiedlichen Prinzipien erfolgen. Beispielsweise ist die katalytische Reformierung bekannt, bei der ein Teil des Brennstoffs in einer exothermen Reaktion oxidiert wird. Nachteilig an dieser katalytischen Reformierung ist die hohe Wärmeerzeugung, die Systemkomponenten, insbesondere den Katalysator, irreversibel schädigen können.

Eine andere Möglichkeit zur Erzeugung eines Reformats aus Kohlenwasserstoffen ist das "Steam-Reforming" Dabei werden Kohlenwasserstoffe mit Hilfe von Wasserdampf in einer endothermen Reaktion zu Wasserstoff umgesetzt.

Eine Kombination dieser beiden Prinzipien, das heißt der Reformierung auf der Grundlage einer exothermen Reaktion und der Erzeugung von Wasserstoff durch eine endotherme Reaktion, bei der die Energie für die Dampfreformierung aus der Verbrennung der Kohlenwasserstoffe gewonnen wird, wird als autotherme Reformierung bezeichnet. Hierbei kommt es jedoch zu den zusätzlichen Nachteilen, dass eine Zuführmöglichkeit für Wasser bereitgestellt werden muss. Hohe Temperaturgradienten zwischen der Oxidationszone und der Reformierungszone stellen weitere Probleme im Temperaturhaushalt des gesamten Systems dar.

Allgemein lässt sich die Reaktion, bei der Luft und Brennstoff in einem Reformer zu einem wasserstoffreichen Gasgemisch umgesetzt werden, wie folgt formulieren:

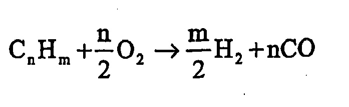

Durch unvollkommene Umsetzung der Kohlenwasserstoffe in dieser endothermen Reaktion können sich jedoch, anders als in der Gleichung beschrieben, Nebenprodukte, wie Restkohlenwasserstoffe oder Ruß, bilden. Diese schlagen sich dann zumindest teilweise auf dem Reformer nieder. Dies hat eine Deaktivierung des im Reformers befindlichen Katalysators zur Folge, was so weit gehen kann, dass sich der Katalysator nahezu komplett mit Ruß zusetzt. Der im Reformer auftretende Druckverlust steigt hierdurch an. Der Reformer wird unbrauchbar, beziehungsweise er muss regeneriert werden.

Gemäß dem Stand der Technik wird eine solche Regeneration insbesondere durch das Abbrennen des im Reformer abgelagerten Rußes durchgeführt. Hierbei können hohe Temperaturen entstehen, die zu einer dauerhaften, das heißt insbesondere irreversiblen Schädigung des Katalysators oder des Trägermaterials führen. Außerdem erschweren große Temperaturgradienten beim Start des Rußabbrandes die Regelung des Reformers. Da bei Sauerstoffüberschuss während des Abbrennverfahrens Sauerstoff am Ausgang des Reformers auftreten kann, ist der Einsatz eines derart zu regenerierenden Reformers in einem SO-Brennstoffzellensystem nicht möglich.

Die Dokumente US 2004/0241505 A1, US 4,293,315 und US 2003/0150163 A1 betreffen Reformierverfahren, bei denen die Temperatur im Reformer gezielt beeinflusst wird.

Der Erfindung liegt die Aufgabe zugrunde, die Regenerierung eines Reformers zu ermöglichen, so dass die beschriebenen Probleme beseitigt werden, wobei insbesondere hohe Temperaturen, große Temperaturgradienten und unerwünschter Sauerstoffanfall am Ausgang des Reformers vermieden werden sollen.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen Verfahren dadurch auf, dass die Zuführrate des Brennstoffs während mehrerer aufeinanderfolgender Zeitintervalle gegenüber der Zuführrate im kontinuierlichen Betrieb herabgesetzt ist und dass zwischen den aufeinanderfolgenden Zeitintervallen die Zuführrate des Brennstoffs größer ist als während der aufeinanderfolgenden Zeitintervalle. Im Normalbetrieb werden dem Reformer Brennstoff und Luft kontinuierlich zugeführt. Dabei herrschen Temperaturen im Bereich und oberhalb von 650 °C. Der Reformer arbeitet im thermischen Gleichgewicht, so dass im stationären Betrieb nicht mit einer Temperaturerhöhung zu rechnen ist. Die beschriebenen Ablagerungen im Katalysator führen jedoch nach und nach zu einer Deaktivierung. Schaltet man nun im laufenden Betrieb des Reformers die Brennstoffzufuhr langfristig ab, so kommt es zu einem Abbrand des Rußes mit Temperaturen von weit über 1000 °C, was zu einer Zerstörung des Katalysators beziehungsweise des kompletten Reformers führen kann. Dies hängt damit zusammen, dass die Rußabbrandreaktion

C+O₂ → CO₂

exotherm verläuft. Ebenso kommt es nach vollständigem Abbrennen des Katalysators zu einem Sauerstoffaustrag am Ende des Reformers, was die Zerstörung der Anode einer SO-Brennstoffzelle zur Folge hätte. Gemäß dem erfindungsgemäßen Verfahren wird nun vorgeschlagen, dass die Brennstoffzuführung pulsweise reduziert wird, wobei die einzelnen Pulse nur über einen kurzen Zeitraum andauern. Sauerstoff beziehungsweise Luft wird an die Rußablagerung gebracht, so dass der Oxidationsprozess beginnen kann. Folglich steigt auch die Temperatur im Katalysator an. Bevor die Temperatur jedoch so hoch ist, dass der Reformer Schaden nehmen kann, wird die Brennstoffzufuhr wieder erhöht. Somit ist am Ende eines Zeitintervalls mit reduzierter Zuführrate ein Teil des Reformers regeneriert, das heißt im Wesentlichen rußbeziehungsweise ablagerungsfrei. Der Reformierungsprozess kann nach dem Regenerierungsintervall fortgesetzt werden. Da dieser endotherm verläuft, kühlt der Reformer wieder auf normale Temperaturen ab. Diese Prozedur wird so lange wiederholt, bis der komplette Reformer regeneriert ist. Es erfolgt demnach eine zonenweise Regenerierung. Durch die pulsweise Reduzierung des Brennstoffes kann sichergestellt werden, dass kein Sauerstoff die Brennstoffzellen-Anode erreicht, da der Sauerstoff bei der Reaktion verbraucht wird.

Die Erfindung ist in vorteilhafter Weise dadurch weitergebildet, dass die Zuführrate des Brennstoffs während mindestens eines der aufeinanderfolgenden Zeitintervalle Null beträgt. Aufgrund des vollständigen Abschaltens der Brennstoffzufuhr während der aufeinanderfolgenden Zeitintervalle kann ein effizienter Abbrand der Ablagerungen erfolgen. Bei nicht vollständiger Abschaltung der Brennstoffzufuhr kommt es zu einer erhöhten Wasserproduktion im Reformer. Dieses Wasser ist in der Lage, den Ruß und andere Ablagerungen aus dem Reformer nach der Gleichung

C+H₂O → CO+H₂

zu entfernen.

Es kann weiterhin nützlich sein, dass der Sauerstoffgehalt der aus dem Reformer austretenden Substanzen gemessen wird und dass beim Überschreiten eines Schwellenwertes durch den Sauerstoffgehalt der Reformer in den kontinuierlichen Betrieb übergeht. Der Sauerstoffgehalt am Ausgang des Reformers dient somit als Indikator für die vollständige Regeneration des Reformers. Durch den Nachweis des Sauerstoffgehalts kann weiterhin sichergestellt werden, dass keine übermäßigen Mengen an Sauerstoff auf die Anode einer SO-Brennstoffzelle treffen.

In diesem Zusammenhang ist es nützlich, dass der Sauerstoffgehalt durch eine Lambdasonde gemessen wird.

Ebenfalls kann vorgesehen sein, dass der Sauerstoffgehalt durch eine Brennstoffzelle gemessen wird. Will man den Einbau einer Lambdasonde einsparen, so können die elektrischen Ausgangswerte der Brennstoffzelle direkt zum Erkennen eines Anstiegs des Sauerstoffgehalts verwendet werden.

Das erfindungsgemäße Verfahren ist insbesondere in dem Zusammenhang nützlich, dass bei einem Reformer mit zwei Brennstoffzuführungen eine der Brennstoffzuführungen während der Regeneration mit einer Zuführrate arbeitet, die der Zuführrate im kontinuierlichen Betrieb im Wesentlichen entspricht. Bei einem Reformer mit zwei Brennstoffzuführungen hat man somit eine größere Variationsmöglichkeit im Hinblick auf eine Veränderung der Brennstoffzuführrate. Dies betrifft insbesondere die Möglichkeit eines teilweise unveränderten Betriebs des Reformers, während in anderen Bereichen des Reformers durch Funktionsänderungen eine Regeneration stattfindet.

Das erfindungsgemäße Verfahren ist in diesem Zusammenhang nützlicherweise dadurch weitergebildet, dass der Reformer eine Oxidationszone und eine Reformierungszone aufweist, dass der Reformierungszone Wärme zuführbar ist, dass der Oxidationszone ein Gemisch aus Brennstoff und Oxidationsmittel unter Verwendung einer ersten Brennstoffzuführung zugeführt wird, das nach zumindest teilweiser Oxidation des Brennstoffs zumindest teilweise der Reformierungszone zuführbar ist, dass der Reformierungszone zusätzlich Brennstoff unter Verwendung einer zweiten Brennstoffzuführung zuführbar ist und dass die zweite Brennstoffzuführung während der aufeinanderfolgenden Zeitintervalle mit herabgesetzter Zuführrate arbeitet. Der zusätzlich zugeführte Brennstoff bildet somit zusammen mit dem Abgas aus der Oxidationszone das Ausgangsgasgemisch für den Reformierungsprozess. Durch die Vermischung des Brennstoffs mit dem Abgas wird ein kleiner λ-Wert zur Verfügung gestellt (beispielsweise λ = 0,4), und unter Zuführung von Wärme kann eine endotherme Reformierungsreaktion stattfinden. Im Hinblick auf die erfindungsgemäße Regeneration ist festzustellen, dass der Betrieb in der Oxidationszone des Reformers unverändert weiterlaufen kann, während nur die zweite Kraftstoffzufuhr abgeschaltet beziehungsweise reduziert wird.

Es ist besonders nützlich, dass der Reformierungszone Wärme aus der exothermen Oxidation in der Oxidationszone zuführbar ist. Die in der Oxidationszone entstehende Wärmeenergie wird somit im Rahmen der Reformierungsreaktion umgesetzt, so dass die Nettowärmeproduktion des Gesamtprozesses nicht zu Problemen im Temperaturhaushalt des Reformers führt.

Nützlicherweise ist vorgesehen, dass die Reformierungszone eine Oxidationsmittelzuführung aufweist, über die zusätzlich Oxidationsmittel zuführbar ist. Auf diese Weise steht ein weiterer Parameter zur Beeinflussung der Reformierung zur Verfügung, so dass diese optimiert werden kann.

Die Erfindung ist in besonders nützlicher Weise dadurch weitergebildet, dass der zusätzliche Brennstoff einer Einspritz- und Gemischbildungszone zuführbar ist und dass der zusätzliche Brennstoff aus der Einspritz- und Gemischbildungszone in die Reformierungszone strömen kann. Diese Einspritz- und Gemischbildungszone ist somit in Strömungsrichtung der Reformierungszone vorgelagert, so dass der Reformierungszone ein gut vermischtes Ausgangsgas für die Reformierungsreaktion zur Verfügung gestellt wird.

In diesem Zusammenhang ist es besonders nützlich, dass der zusätzliche Brennstoff durch die thermische Energie des aus der Oxidationszone austretenden Gasgemischs zumindest teilweise verdampft wird. Somit kann die Reaktionswärme aus der Oxidation auch in vorteilhafter Weise für den Verdampfungsprozess des Brennstoffs genutzt werden.

Weiterhin kann es nützlich sein, dass das in der Oxidationszone erzeugte Gasgemisch teilweise unter Umgehung der Einspritz- und Gemischbildungszone der Reformierungszone zuführbar ist. Hierdurch steht noch eine weitere Möglichkeit zur Beeinflussung des Reformierungsprozesses zur Verfügung, so dass eine weitere Verbesserung des aus dem Reformer austretenden Reformats im Hinblick auf dessen Anwendung erreicht werden kann.

Die Erfindung baut auf dem gattungsgemäßen Reformer dadurch auf, dass die Steuerung geeignet ist, die Zuführrate des Brennstoffs während mehrerer aufeinanderfolgender Zeitintervalle gegenüber der Zuführrate im kontinuierlichen Betrieb herabzusetzen ist, und dass zwischen den aufeinanderfolgenden Zeitintervallen die Zuführrate des Brennstoffs größer ist als während der aufeinanderfolgenden Zeitintervalle. Auf diese Weise werden die Vorteile und Besonderheiten des erfindungsgemäßen Verfahrens auch im Rahmen eines Reformers umgesetzt.

Der Erfindung liegt die Erkenntnis zugrunde, dass hohe Temperaturen, große Temperaturgradienten, unerwünschte Druckanstiege und ein unerwünschter Anfall von Sauerstoff am Ausgang des Reformers dadurch verhindert werden können, dass die Brennstoffzuführung pulsweise verändert wird, wobei insbesondere eine pulsweise Abschaltung der Brennstoffzuführung erfolgt.

Die Erfindung wird nun in Bezug auf die begleitenden Zeichnungen anhand bevorzugter Ausführungsformen beispielhaft erläutert.

Dabei zeigt:
- Figur 1: ein Flussdiagramm zur Erläuterung eines erfindungsgemäßen Verfahrens; und
- Figur 2: eine schematische Darstellung eines erfindungsgemäßen Reformers.

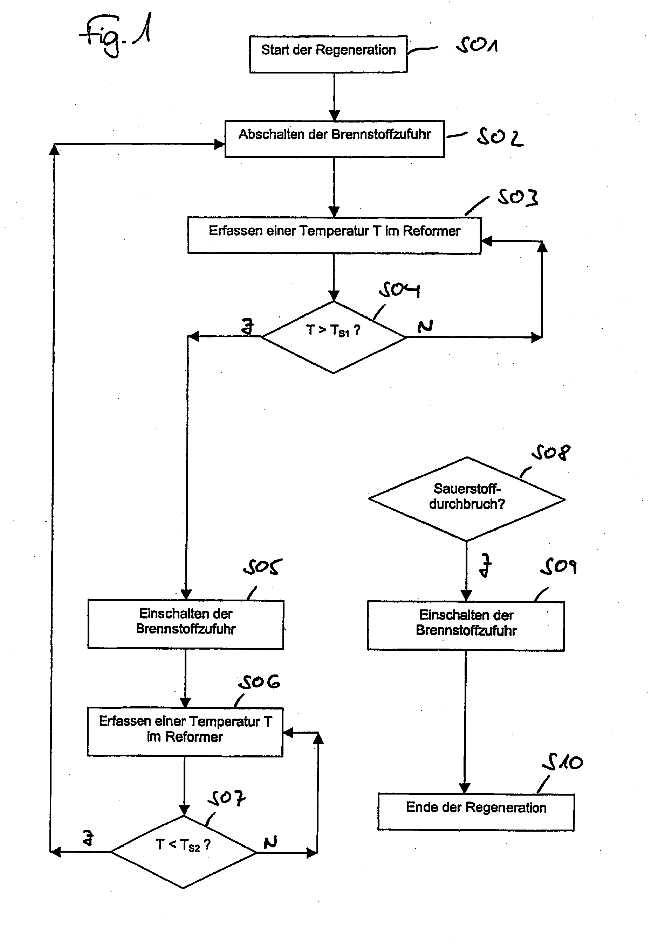

Figur 1 zeigt ein Flussdiagramm zur Erläuterung eines erfindungsgemäßen Verfahrens. Nach dem Start der Regeneration des Reformers in Schritt S01 wird in Schritt S02 die Brennstoffzufuhr abgeschaltet. Nachfolgend wird in Schritt S03 eine Temperatur im Reformer erfasst. In Schritt S04 wird bestimmt, ob diese erfasste Temperatur größer ist als ein vorgegebener Schwellenwert T_{S1}. Ist dies nicht der Fall, so wird im abgeschalteten Zustand der Brennstoffzufuhr wiederum die Temperatur im Reformer gemäß Schritt S03 erfasst. Wird in Schritt S04 festgestellt, dass die Temperatur den Schwellenwert T_{S1} überschreitet, wird in Schritt S05 die Brennstoffzufuhr wieder eingeschaltet. Nachfolgend wird in Schritt S06 erneut die Temperatur im Reformer erfasst. In Schritt S07 wird bestimmt, ob diese erfasste Temperatur kleiner ist als ein vorgegebener Schwellenwert T_{S2}. Ist dies nicht der Fall, so wird wiederum in Schritt S06 die Temperatur im Reformer erfasst; die Brennstoffzufuhr bleibt eingeschaltet. Wird in Schritt S07 festgestellt, dass die Temperatur kleiner ist als die Schwellentemperatur T_{S2}, so wird die Brennstoffzufuhr gemäß Schritt S02 wieder abgeschaltet, so dass das nächste Zeitintervall zur Reformergeneration beginnt.

Parallel zu der Temperaturüberwachung findet eine Überwachung auf Sauerstoffdurchbruch in dem Reformer gemäß Schritt S08 statt. Dies dient dazu, das Ende der Regeneration festzulegen. Findet somit ein Sauerstoffdurchbruch statt, so wird, falls die Brennstoffzufuhr abgeschaltet ist, gemäß Schritt S09 die Brennstoffzufuhr eingeschaltet. Nachfolgend endet die Regeneration gemäß Schritt S10.

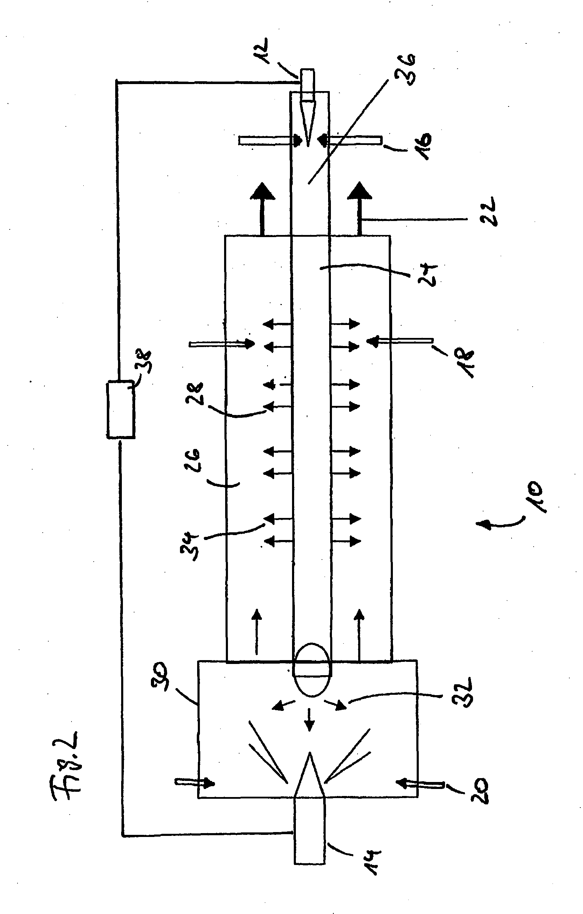

Figur 2 zeigt eine schematische Darstellung eines erfindungsgemäßen Reformers. Die Erfindung ist nicht an die spezielle Gestaltung des hier dargestellten Reformers gebunden. Vielmehr kann die erfindungsgemäße Regeneration in unterschiedlichen Reformertypen stattfinden, so lange es möglich ist, die Brennstoffzuführung kurzfristig zu reduzieren beziehungsweise zu unterbrechen. Dem hier dargestellten Reformer 10, der auf dem Prinzip der partiellen Oxidation vorzugsweise ohne Zuführung von Wasserdampf beruht, kann Brennstoff 12 und Oxidationsmittel 16 über jeweilige Zuführungen eingespeist werden. Als Brennstoff 12 kommt beispielsweise Diesel in Frage, das Oxidationsmittel 16 ist in der Regel Luft. Die unmittelbar bei der anfänglichen Verbrennung entstehende Reaktionswärme kann in einer optional zur Verfügung gestellten Kühlzone 36 teilweise abgeführt werden. Das Gemisch tritt dann weiter in die Oxidationszone 24, die als innerhalb der Reformierungszone 26 angeordnetes Rohr realisiert sein kann. In alternativen Ausführungsformen ist die Oxidationszone durch mehrere Rohre oder durch eine spezielle Rohrführung innerhalb der Reformierungszone 26 realisiert. In der Oxidationszone findet eine Umsetzung von Brennstoff und Oxidationsmittel in einer exothermen Reaktion mit λ ≈ 1 statt. Das dabei entstehende Gasgemisch 32 tritt danach in eine Einspritz- und Gemischbildungszone 30 ein, in der es mit eingespritztem Brennstoff 14 vermischt wird. Die thermische Energie des Gasgemisches 32 kann dabei die Verdampfung des Brennstoffs 14 unterstützen. Zusätzlich kann vorgesehen sein, dass in die Einspritz- und Gemischbildungszone 30 Oxidationsmittel zugeführt wird. Das so gebildete Gemisch gelangt dann in die Reformierungszone 26, wo es in einer endothermen Reaktion mit zum Beispiel λ ≈ 0,4 umgesetzt wird. Die für die endotherme Reaktion benötigte Wärme 28 wird aus der Oxidationszone 24 abgeführt. Zur Optimierung des Reformierungsprozesses kann zusätzlich Oxidationsmittel 18 in die Reformierungszone 26 zugeführt werden. Weiterhin ist es möglich, einen Teil des in der Oxidationszone 24 erzeugten Gasgemisches 34 direkt unter Umgehung der Einspritz- und Gemischbildungszone 30 der Reformierungszone 26 zuzuführen. Das Reformat 22 strömt dann aus der Reformierungszone 26 aus und steht für weitere Anwendungen zur Verfügung.

Dem Reformer ist eine Steuerung 38 zugeordnet, die unter anderem sowohl die primäre 12 als auch die sekundäre Brennstoffzuführung 14 steuern kann.

Um bei dem in Figur 2 dargestellten Ausführungsbeispiel eine Regeneration der Reformierungszone 26 vorzunehmen, kann es ausreichend sein, die Brennstoffzuführung 14 pulsweise abzuschalten, während die Brennstoffzuführung 12 zur Aufrechterhaltung der Oxidation im Reformer mit unveränderter Rate betrieben wird. Der in der Reformierungszone 26 vorgesehene Katalysator wird dann mit Verbrennungsabgasen, die Sauerstoff enthalten, abgebrannt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 12: Brennstoff
- 14: Brennstoff
- 16: Oxidationsmittel
- 18: Oxidationsmittel
- 20: Oxidationsmittel
- 22: Reformat
- 24: Oxidationszone
- 26: Reformierungszone
- 28: Wärme
- 30: Einspritz- und Gemischbildungszone
- 34: Gasgemisch
- 36: Kühlzone
- 38: Steuerung

## Patentansprüche

1. Verfahren zum Regenerieren eines Reformers, dem in einer Reformierphase mit kontinuierlichem Betrieb Brennstoff (12, 14) und Oxidationsmittel (16, 18, 20) zugeführt wird, wobei die Zuführrate des Brennstoffs (12, 14) zum Zwecke der Regeneration in einer Regenerationsphase gegenüber der Zuführrate in der Reformierphase herabgesetzt wird, **dadurch gekennzeichnet,**
- **dass** die Zuführrate des Brennstoffs (12, 14) in der Regenerationsphase während mehrerer aufeinanderfolgender Zeitintervalle gegenüber der Zuführrate in der Reformierphase herabgesetzt wird und
- **dass** zwischen den aufeinanderfolgenden Zeitintervallen die Zuführrate des Brennstoffs (12, 14) größer ist als während der aufeinanderfolgenden Zeitintervalle.

2. Verfahren nach Anspruch 1, **dadurch gekennzeichnet, dass** die Zuführrate des Brennstoffs (12, 14) während mindestens eines der aufeinanderfolgenden Zeitintervalle Null beträgt.

3. Verfahren nach Anspruch 1 oder 2, **dadurch gekennzeichnet,**
- **dass** der Sauerstoffgehalt der aus dem Reformer austretenden Substanzen gemessen wird und
- **dass** beim Überschreiten eines Schwellenwertes durch den Sauerstoffgehalt der Reformer in den kontinuierlichen Betrieb übergeht.

4. Verfahren nach einem der vorhergehenden Ansprüche, **dadurch gekennzeichnet, dass** der Sauerstoffgehalt durch eine Lambdasonde gemessen wird.

5. Verfahren nach einem der vorhergehenden Ansprüche, **dadurch gekennzeichnet, dass** der Sauerstoffgehalt durch eine Brennstoffzelle gemessen wird.

6. Verfahren nach einem der vorhergehenden Ansprüche, **dadurch gekennzeichnet, dass** bei einem Reformer mit zwei Brennstoffzuführungen eine der Brennstoffzuführungen während der Regeneration mit einer Zuführrate arbeitet, die der Zuführrate im kontinuierlichen Betrieb im Wesentlichen entspricht.

7. Verfahren nach Anspruch 6, **dadurch gekennzeichnet,**
- **dass** der Reformer eine Oxidationszone (24) und eine Reformierungszone (26) aufweist,
- **dass** der Reformierungszone (26) Wärme (28) zuführbar ist,
- **dass** der Oxidationszone (24) ein Gemisch aus Brennstoff (12) und Oxidationsmittel (16, 18, 20) unter Verwendung einer ersten Brennstoffzuführung zugeführt wird, das nach zumindest teilweiser Oxidation des Brennstoffs (12) zumindest teilweise der Reformierungszone (26) zuführbar ist,
- **dass** der Reformierungszone (26) zusätzlich Brennstoff (14) unter Verwendung einer zweiten Brennstoffzuführung zuführbar ist und
- **dass** die zweite Brennstoffzuführung während der aufeinanderfolgenden Zeitintervalle mit herabgesetzter Zuführrate arbeitet.

8. Verfahren nach Anspruch 7, **dadurch gekennzeichnet, dass** der Reformierungszone (26) Wärme (28) aus der exothermen Oxidation in der Oxidationszone (24) zuführbar ist.

9. Verfahren nach Anspruch 7 oder 8, **dadurch gekennzeichnet, dass** die Reformierungszone (26) eine Oxidationsmittelzuführung aufweist, über die zusätzlich Oxidationsmittel (16, 18, 20) zuführbar ist.

10. Verfahren nach einem der Ansprüche 7 bis 9, **dadurch gekennzeichnet,**
- **dass** der zusätzliche Brennstoff (14) einer Einspritz- und Gemischbildungszone (30) zuführbar ist und
- **dass** der zusätzliche Brennstoff (14) aus der Einspritz- und Gemischbildungszone (30) in die Reformierungszone (26) strömen kann.

11. Verfahren nach einem der Ansprüche 7 bis 10, **dadurch gekennzeichnet, dass** der zusätzliche Brennstoff (14) durch die thermische Energie des aus der Oxidationszone (24) austretenden Gasgemischs (34) zumindest teilweise verdampft wird.

12. Verfahren nach Anspruch 10 oder 11, **dadurch gekennzeichnet, dass** das in der Oxidationszone (24) erzeugte Gasgemisch (34) teilweise unter Umgehung der Einspritz- und Gemischbildungszone (30) der Reformierungszone (26) zuführbar ist.

13. Reformer mit einer Steuerung (38), die eine Regeneration des Reformers ermöglicht, wobei die Steuerung (38) geeignet ist, dem Reformer in einer Reformierphase mit kontinuierlichem Betrieb Brennstoff (12, 14) und Oxidationsmittel (16, 18, 20) zuzuführen und die Zuführrate des Brennstoffs (12, 14) zum Zwecke der Regeneration in einer Regenerationsphase gegenüber der Zuführrate in der Reformierphase herabzusetzen, **dadurch gekennzeichnet, dass** die Steuerung (38) geeignet ist, die Zuführrate des Brennstoffs (12, 14) in der Regenerationsphase während mehrerer aufeinanderfolgender Zeitintervalle gegenüber der Zuführrate in der Reformierphase herabzusetzen, und zwischen den aufeinanderfolgenden Zeitintervallen die Zuführrate des Brennstoffs (12, 14) größer zu wählen als während der aufeinanderfolgenden Zeitintervalle.

## Claims

1. A method for regenerating a reformer fed with fuel (12, 14) and an oxidant (16, 18, 20) in a reforming phase with continuous operation, the feed rate of the fuel (12, 14) being reduced as compared to the feed rate in the reforming phase for the purpose of regeneration in a regeneration phase, **characterized in that**
- during several successive time intervals the feed rate of the fuel (12, 14) in the regeneration phase is lowered with respect to the feed rate in the reforming phase, and
- the feed rate of the fuel (12, 14) is higher between the successive time intervals than during the successive time intervals.

2. The method as set forth in claim 1, **characterized in that** the feed rate of the fuel (12, 14) amounts to zero during at least one of the successive time intervals.

3. The method as set forth in claim 1 or 2, **characterized in that**
- the oxygen content in the substances leaving the reformer is measured, and
- the reformer passes into continuous operation when the oxygen content exceeds a threshold value.

4. The method as set forth in any of the preceding claims, **characterized in that** the oxygen content is measured by a lambda sensor.

5. The method as set forth in any of the preceding claims, **characterized in that** the oxygen content is measured by a fuel cell.

6. The method as set forth in any of the preceding claims, **characterized in that** with a reformer having a dual fuel feed, one of the fuel feeds works during regeneration with a feed rate which substantially corresponds to the feed rate in continuous operation.

7. The method as set forth in claim 6, **characterized in that**
- the reformer comprises an oxidation zone (24) and a reforming zone (26),
- the reforming zone (26) is feedable with heat (28),
- the oxidation zone (24) is feedable with a mixture of fuel (12) and oxidant (16, 18, 20) in using a first fuel feed, the mixture being at least partly feedable to the reforming zone (26) after at least partly oxidizing the fuel (12),
- the reforming zone (26) is feedable with additional fuel (14) by using a second fuel feed, and
- the second fuel feed works during the successive time intervals with a reduced feed rate.

8. The method as set forth in claim 7, **characterized in that** heat (28) from the exothermic oxidation in the oxidation zone (24) can be fed to the reforming zone (26).

9. The method as set forth in claim 7 or 8, **characterized in that** the reforming zone (26) comprises an oxidant feed via which additional oxidant (16, 18, 20) is feedable.

10. The method as set forth in any of the claims 7 to 9, **characterized in that**
- the additional fuel (14) is feedable to an injection and mixing zone (30), and
- the additional fuel (14) can flow from the injection and mixing zone (30) into the reforming zone (26).

11. The method as set forth in any of the claims 7 to 10, **characterized in that** the additional fuel (14) is evaporated at least in part by the thermal energy of the gas mixture (34) emerging from the oxidation zone (24).

12. The method as set forth in claim 10 or 11, **characterized in that** the gas mixture (34) generated in the oxidation zone (24) is feedable to the reforming zone (26) partly in bypassing the injection and mixing zone (30).

13. A reformer including a controller (38) achieving regeneration of the reformer, the controller (38) being suitable to feed the reformer with fuel (12, 14) and an oxidant (16, 18, 20) in a reforming phase and to reduce the feed rate of the fuel (12, 14) as compared to the feed rate in the reforming phase for the purpose of regeneration, **characterized in that** the controller (38) is suitable for lowering during several successive time intervals the feed rate of the fuel (12, 14) with respect to the feed rate in the reforming phase, and for choosing the feed rate of the fuel (12, 14) to be higher between the successive time intervals than during the successive time intervals.

## Revendications

1. Procédé pour régénérer un reformeur qui peut être alimenté en combustible (12, 14) et en oxydant (16, 18, 20) pendant une phase de reformage en opération continue, le taux d'alimentation en combustible (12, 14) étant baissé, pour la régénération, dans une phase de régénération par rapport au taux d'alimentation dans la phase de reformage, **caractérisé en ce que**
- le taux d'alimentation en combustible (12, 14) dans la phase de régénération pendant plusieurs intervalles consécutifs de temps est baissé par rapport au taux d'alimentation dans la phase de reformage et
- entre les intervalles consécutifs le taux d'alimentation en combustible (12, 14) est plus haut que pendant les intervalles consécutifs de temps.

2. Procédé selon la revendication 1, **caractérisé en ce que** le taux d'alimentation en combustible (12, 14) pendant au moins un des intervalles consécutifs de temps vaut zéro.

3. Procédé selon la revendication 1 ou 2, **caractérisé en ce que**
- la teneur en oxygène des substances émanant du reformeur est mesurée et
- lorsque la teneur en oxygène dépasse une valeur seuil, le reformeur passe en opération continue.

4. Procédé selon l'une des revendications précédentes, **caractérisé en ce que** la teneur en oxygène est mesurée par une sonde lambda.

5. Procédé selon l'une des revendications précédentes, **caractérisé en ce que** la teneur en oxygène est mesurée par une pile à combustible.

6. Procédé selon l'une des revendications précédentes, **caractérisé en ce que** dans un reformeur ayant deux amenées de combustible, l'une des amenées de combustible fonctionne pendant la régénération avec un taux d'alimentation qui correspond essentiellement au taux d'alimentation en opération continue.

7. Procédé selon la revendication 6, **caractérisé en ce que**
- le reformeur comporte une zone d'oxydation (24) et une zone de reformage (26),
- la zone de reformage (26) peut être alimentée en chaleur (28),
- la zone d'oxydation (24) peut être alimentée en un mélange de combustible (12) et d'oxydant (16, 18, 20) en utilisant une première amenée de combustible, le mélange pouvant être amené au moins partiellement à la zone de reformage (26) après une oxydation au moins partielle du combustible (12),
- la zone de reformage (26) peut additionnellement être alimentée en combustible en utilisant une deuxième amenée de combustible, et
- pendant les intervalles consécutifs de temps, la deuxième amenée de combustible fonctionne avec un taux d'alimentation abaissé.

8. Procédé selon la revendication 7, **caractérisé en ce que** la zone de reformage (26) peut être alimentée en chaleur (28) issue de l'oxydation exothermique dans la zone d'oxydation (24).

9. Procédé selon la revendication 7 ou 8, **caractérisé en ce que** la zone de reformage (26) comporte une amenée d'oxydant par laquelle de l'oxydant (16, 18, 20) peut additionnellement être amené.

10. Procédé selon l'une des revendications 7 à 9, **caractérisé en ce que**
- le combustible (14) supplémentaire peut être amené à une zone d'injection et de formation de mélange (30) et
- le combustible (14) supplémentaire peut couler de la zone d'injection et de formation de mélange (30) dans la zone de reformage (26).

11. Procédé selon l'une des revendications 7 à 10, **caractérisé en ce que** le combustible supplémentaire (14) est évaporé au moins partiellement par l'énergie thermique du mélange de gaz (34) sortant de la zone d'oxydation (24).

12. Procédé selon la revendication 10 ou 11, **caractérisé en ce que** le mélange de gaz (34) produit dans la zone d'oxydation (24) peut être amené partiellement à la zone de reformage (26) en contournant la zone d'injection et de formation de mélange (30) de la zone de reformage (26).

13. Reformeur comportant une commande (38) permettant une régénération du reformeur, la commande (38) étant apte à alimenter le reformeur en combustible (12, 14) et en oxydant (16, 18, 20) dans une phase de reformage en opération continue et à baisser le taux d'alimentation en combustible (12, 14) pour le but d'une régénération dans une phase de régénération par rapport au taux d'alimentation dans la phase de reformage, **caractérisé en ce que** la commande (38) est apte à baisser le taux d'alimentation en combustible (12, 14) dans la phase de régénération pendant plusieurs intervalles consécutifs de temps par rapport au taux d'alimentation dans la phase de reformage, et à choisir pendant les intervalles consécutifs de temps le taux d'alimentation en combustible (12, 14) plus haut que pendant les intervalles consécutifs de temps.
